# EUROPEAN PATENT SPECIFICATION

(11) **EP 1 291 995 B1**
(45) Date of publication and mention of the grant of the patent: **30.05.2012**
(21) Application number: 01925583.5
(22) Date of filing: 26.04.2001
(51) Int. Cl.: H02G 3/30, H02G 3/04, F16L 3/00

(54) **DEVICE FOR CONCEALING ELECTRICAL AND/OR COMMUNICATION LINES**
EINRICHTUNG ZUM VERBERGEN VON ELEKTRISCHEN UND/ODER KOMMUNIKATIONSLEITUNGEN
DISPOSITIF PERMETTANT DE CACHER DES LIGNES ELECTRIQUES ET/OU DE COMMUNICATION

(30) Priority: 28.04.2000 ES 200001090
(43) Date of publication of application: 12.03.2003
(73) Proprietor: Legrand Group España, S.L., 28850 Torrejón de Ardoz Madrid (ES)
(72) Inventor: RODRIGUEZ GIL, Salvador, E-08850 Gava (ES); GARCIA MAGALLON, Adolfo, E-08850 Gava (ES)
(74) Representative: Elzaburu Marquez, Alberto
(86) International application number: PCT/ES2001/000157
(87) International publication number: WO 2001/086771

(56) References cited:
- EP-A1- 0 945 943
- EP-A2- 0 746 074
- FR-A1- 2 799 897
- GB-A- 2 137 305

## Description

### Technical sector of the invention.-

The object of the invention is a device for concealing electrical and communication cables, particularly those secured on walls, which is specifically applicable for concealing low-voltage electrical distribution cables consisting of intertwined cables, and/or telephone communication lines secured on walls.

### Background of the invention.-

As we are aware, it is common practice to secure low-voltage electrical distribution cables directly to exterior and interior walls, following a route which adapts to the needs of the buildings connections, and it is also common practice to secure telephone communication lines directly to exterior and interior walls, following a route which in many cases runs alongside the aforementioned electrical cables.

The resulting aesthetic effect of securing the electrical and/or communication cables on interior or exterior walls, turns out to be unsuitable, and more so when they are secured on the front of buildings.

The inventor is not aware of any type of means aimed at diminishing the negative aesthetic effect caused by securing electrical and/or communication cables on exterior and interior walls.

### Explanation of the invention.-

The device for concealing electrical and/or communication cables, object of the invention, is particularly applicable to those secured on walls, such as fronts of buildings, with an end to both diminish the consequent negative aesthetic effect of securing the aforementioned lines, and to improve the final finish of such installations.

The concealing device, according to the invention, is of the type having a longitudinal covering which transversally takes the form of a pronounced "C", whose concave part is designed to house and conceal the electrical cables, and detachable means of support of the longitudinal covering on the wall which are made up of numerous equal pairs of pieces, of which the first piece of each pair consists of a bracket having solid means of anchoring to the wall and the second piece consists of a support which takes the form of a "C", similar to that of the longitudinal covering, and has detachable means of supporting the longitudinal covering and detachable means of coupling to the bracket.

The device according to the preamble of claim 1 is known from the prior art (EP 0 746 074).

Essentially, the concealing device of the invention is characterized in that the detachable means of coupling to the bracket of the second piece and the detachable means of supporting the covering on the wall, are made up of a tubular linking extension adapted to receive the bracket tightly in its interior not allowing room for turning, arranged in a way that when coupling the aforementioned second piece to the bracket, it can be moved by sliding over the bracket.

According to the invention, the characteristics of the device described allow the electrical distribution cables and telephone communication lines to be positioned in the concave part of the longitudinal covering, between the covering itself and the wall to which they are secured, thereby concealing them. It is clear that the assembly of this concealing device, object of the invention, can be carried out both on lines which are already in use and on lines which are being set up, without the concealing device affecting, under any circumstances, either the route or the securing of these lines.

In accordance with a preferred embodiment of the invention, the bracket has a projection which possesses a rim, adapted to allow hanging the covering by means of supporting on one of its arms.

According to another embodiment of the invention, the covering has a number of draining grooves on its lower part.

Another embodiment of the device of the invention consists of the second piece with detachable means of support for the covering, having at least one access orifice adapted to allow tools to be entered.

### Brief description of the drawings.-

In the attached drawings, and given as a non-restrictive example, the concealing device for electrical and/or communication cables, object of the invention, is illustrated. In these drawings,
Figure 1 is a perspective view of the longitudinal covering of the device in accordance with the invention;
Figure 2 is a perspective view of the first piece of the detachable means of support for the longitudinal covering of the device according to the invention;
Figure 3 is a perspective view of the second piece of the detachable means of support of the longitudinal covering of the device according to the invention;
Figure 4 is a perspective view of the first and second pieces at the point of coupling;
Figure 5 is a perspective view of the first and second pieces coupled together;
Figure 6 is a perspective view of the concealing device according to the invention;
Figure 7 is a lateral view from above of the concealing device according to the invention; and
Figure 8 is a lateral view from above of the concealing device according to the invention, with the covering supported by the first piece of the detachable means of support for the covering. Detailed description of the embodiment example.-

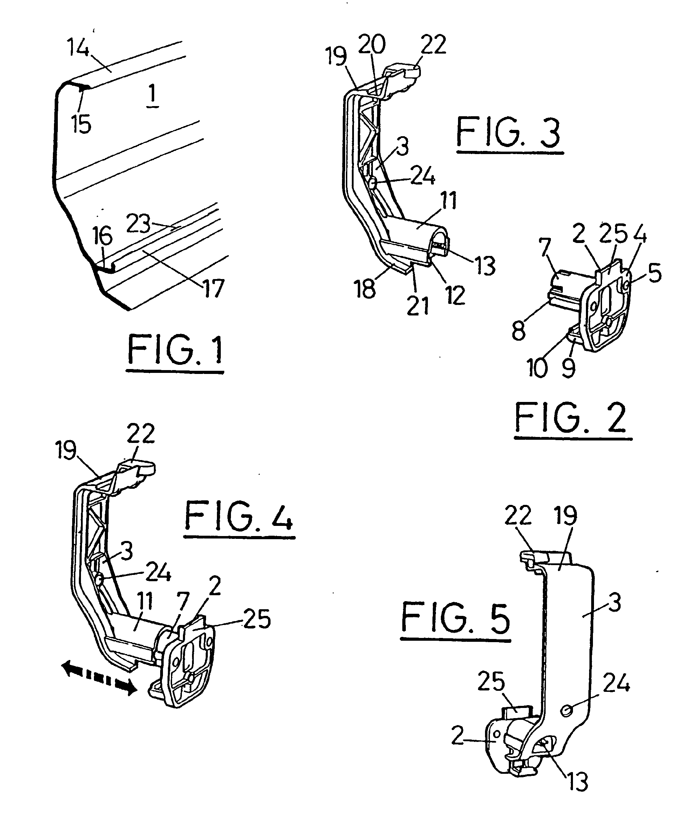

The device for concealing electrical and/or communication cables, object of the invention, which as an example of embodiment is described as having a longitudinal covering 1 on a wall, made up of a number of equal pairs of pieces, a first piece consisting of a bracket 2 (Fig.2), and a second piece 3 (Fig.3).

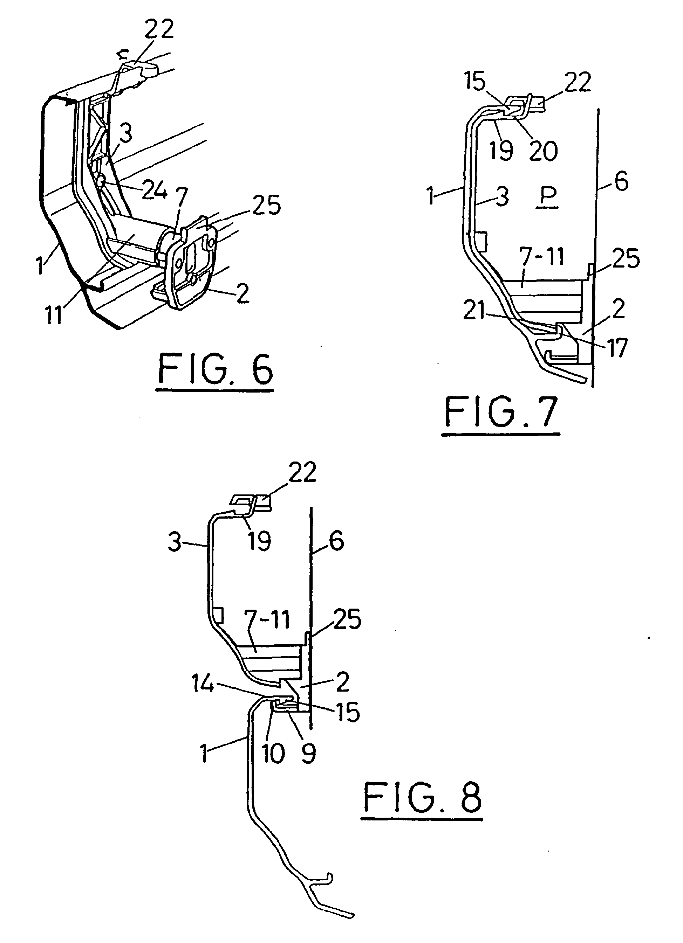

The bracket 2 has a base plate 4 which has three orifices 5, adapted for connecting the bracket to a wall 6 as represented in the drawing in Figures 7 and 8. A tubular extension 7 protrudes perpendicularly from the base plate 4, having two guiding ribs 8 positioned diametrically to each other.

The second piece 3 of the detachable means of support for the longitudinal covering 1, is made up of a support taking the form of a pronounced "C". The lower arm 18 of the second piece 3 having a tubular extension which possesses two longitudinal guiding grooves 12 in its interior which are positioned diametrically to each other and are adapted to tightly receive the corresponding guiding ribs 8 of the tubular extension 7 of the bracket 2, in a way that, as shown in Figure 4, the second piece 3 can be moved by sliding in both directions, but without being able to turn in relation to the bracket 2. The second piece 3 remains secured in position in relation to the bracket 2 by means of a screw 13 which, passed through the second piece 3, can be screwed to the bracket 2, as shown in Figures 3 and 5.

The detachable means of support for the longitudinal covering 1 is made up of an upper arm 14 of the longitudinal covering 1, having in its interior a longitudinal projection 15, and a lower arm 16, which has a longitudinal rim 17 orientated towards its interior, as can be seen in Figure 1. Complementary to this, the upper arm 19 of the second piece 3 has a groove 20, adapted to receive the longitudinal projection 15, while the lower arm 18 of the second piece 3 possesses a ridge 21, adapted to support the longitudinal projection 17. With the detachable means of support in this format, for the longitudinal covering 1 to be supported by the second pieces 3 of the detachable means of support it simply requires the rim 17 of the longitudinal covering 1 to be supported on the ridges 21 of the second pieces 3 which secure the length of longitudinal covering 1 in question, and then place the longitudinal projection 15 of the longitudinal covering 1 on the groove 20 of the second pieces 3, the concealing device according to the invention, adopting the layout shown in Figures 6 and 7. Such a layout establishes a passageway P formed by the concave part of the longitudinal covering 1 and the wall 6, of ample dimensions to allow concealing electrical distribution cables and/or communication lines of those commonly used secured to the wall 6, not represented in the drawings.

To facilitate the assembly of the longitudinal covering 1, the lower part of the base plate 4 of the bracket 2 has a ledge 9 which has a outer rim 10, allowing the longitudinal covering 1 to be supported by its upper arm 14 on the ledge 9, as represented in Figure 9.

In Figures 3 and 8 it can be seen how the upper arm 19 of the second piece 3 has a small bracket 22, whose function is to ensure that the longitudinal covering 1 is secured as tightly as possible to the second piece 3, in the manner indicated in Figures 6 and 7.

The lower arm 16 of the longitudinal covering 1 has a number of draining grooves 23 (Figure 1), for the purpose of draining rainwater.

In Figures 3 and 6, one can see that the second piece 3 has an orifice 24 for the purpose of allowing a tool for securing to be passed through it, e.g. telephone communication lines by means of clasps, not shown, to be supported on an extension 25 which the bracket 2 possesses for this purpose.

## Claims

1. Device for concealing electrical and/or communication cables, particularly those secured to walls, of the type having a longitudinal covering (1) which transversally takes the form of a pronounced "C", whose concave part has the purpose of housing and concealing the electrical cables, and detachable means of supporting the longitudinal covering on the wall which consist of numerous equal pairs of pieces, of which the first piece (2) of each pair is made up of a bracket comprising means of firm fixing to the wall and the second piece (3) is made up of a support which from the side view takes the form of a "C", similar to that of the longitudinal covering, and has detachable means of supporting the longitudinal covering and detachable means of coupling to the bracket, **characterised in that** the detachable means of coupling to the bracket (2) of the second piece (3) of the detachable means of supporting the covering (1) on the wall, comprise a tubular linking extension (11) adapted to tightly fit the bracket in its interior and impeding any turning movement, all of which laid out in a way that when coupling the second piece to the bracket, the former can be moved by sliding over the bracket.

2. Concealing device in accordance with claim 1, which is **characterised in that** the bracket (2) has a protrusion (9) which has a rim (10), adapted to allow the covering (1) to be hung by being supported by one of its arms (14).

3. Concealing device in accordance with claim 2, which is **characterised in that** the covering (1) has numerous draining grooves (23) on its lower part.

4. Concealing device in accordance with claim 3, which is **characterised in that** the second piece (3) of the detachable means of the covering has at least one orifice (24) adapted to allow tools to be entered through it.

## Patentansprüche

1. Vorrichtung zum Verdecken von Elektro- und/oder Datenübertragungskabeln, insbesondere diesen, die an Wänden fixiert sind, der Art, die eine Längsabdeckung (1), die transversal die Form eines ausgeprägten "C"s annimmt, dessen konkaver Teil den Zweck hat, die Elektrokabel einzuhausen und zu verdecken, und ein lösbares Mittel zum Tragen der Längsabdeckung an der Wand aufweist, das aus zahlreichen gleichen Paaren von Stücken besteht, von welchen das erste Stück (2) jedes Paars aus einer Befestigung besteht, die ein Mittel zum festen Anbringen an der Wand aufweist, und das zweite Stück (3) aus einem Träger besteht, der, in der Seitenansicht, die Form eines "C"s annimmt, ähnlich dem der Längsabdeckung, und ein lösbares Mittel zum Tragen der Längsabdeckung und ein lösbares Mittel zum Koppeln mit der Befestigung aufweist, **dadurch gekennzeichnet, dass** das lösbare Mittel zum Koppeln mit der Befestigung (2) des zweiten Stücks (3) des lösbaren Mittels zum Tragen der Abdeckung (1) an der Wand einen rohrförmigen Verbindungsfortsatz (11) aufweist, der geeignet ist, sich fest an die Befestigung in seinem Inneren anzupassen und jede Drehbewegung zu verhindern, wobei alles derart ausgelegt ist, dass, wenn das zweite Stück mit der Befestigung gekoppelt wird, ersteres durch Gleiten über die Befestigung bewegt werden kann.

2. Verdeckungsvorrichtung nach Anspruch 1, die **dadurch gekennzeichnet ist, dass** die Befestigung (2) einen Vorsprung (9) aufweist, der eine Kante (10) aufweist, die geeignet ist zu ermöglichen, dass die Abdeckung (1) gehängt werden kann, während sie durch einen ihrer Arme (14) getragen wird.

3. Verdeckungsvorrichtung nach Anspruch 2, die **dadurch gekennzeichnet ist, dass** die Abdeckung (1) zahlreiche Rinnennuten (23) an ihrem unteren Teil aufweist.

4. Verdeckungsvorrichtung nach Anspruch 3, die **dadurch gekennzeichnet ist, dass** das zweite Stück (3) des abnehmbaren Mittels der Abdeckung zumindest eine Mündung (24) aufweist, die geeignet ist zu ermöglichen, dass Werkzeuge durch sie eingesetzt werden.

## Revendications

1. Dispositif pour dissimuler des câbles électriques et/ou de communication, en particulier ceux fixés à des murs, du type ayant une couverture longitudinale (1) qui prend transversalement la forme d'un « C » prononcé, dont la partie concave a pour fonction de loger et dissimuler les câbles électriques, et des moyens amovibles de support de la couverture longitudinale sur le mur qui comprennent de nombreuses paires d'éléments identiques, dont le premier élément (2) de chaque paire est constitué d'une attache comprenant des moyens d'accrochage rigide au mur et le deuxième élément (3) est constitué d'un support qui dans une vue de côté prend la forme d'un « C », similaire à celle de la couverture longitudinale, et comprend des moyens amovibles de support de la couverture longitudinale et des moyens amovibles de couplage à l'attache, **caractérisé en ce que** les moyens amovibles de couplage à l'attache (2) du deuxième élément (3) des moyens amovibles de support de la couverture (1) sur le mur comprennent une extension de liaison tubulaire (11) adaptée pour l'ajustement serré de l'attache à l'intérieur de celle-ci et empêchant tout mouvement de rotation, tous étant disposés de manière que, lors du couplage du deuxième élément à l'attache, le premier peut être déplacé par coulissement sur l'attache.

2. Dispositif de dissimulation selon la revendication 1, **caractérisé en ce que** l'attache (2) comporte une saillie (9) qui présente un rebord (10), adapté pour permettre de suspendre la couverture (1) en étant supporté par un de ses bras (14).

3. Dispositif de dissimulation selon la revendication 2, **caractérisé en ce que** la couverture (1) comporte de nombreuses rainures de drainage (23) sur sa partie inférieure.

4. Dispositif de dissimulation selon la revendication 3, **caractérisé en ce que** le deuxième élément (3) des moyens amovibles de la couverture comporte au moins un orifice (24) adopté pour permettre à des outils de pénétrer à travers celui-ci.
